(19) Europäisches Patentamt
European Patent Office
Office européen des brevets

(11) **EP 2 066 502 B1**

(12) **EUROPEAN PATENT SPECIFICATION**

(45) Date of publication and mention
of the grant of the patent:
**27.08.2014 Bulletin 2014/35**

(51) Int Cl.:
***B60C 7/18*** (2006.01)

(21) Application number: **07842839.8**

(22) Date of filing: **20.09.2007**

(86) International application number:
**PCT/US2007/078975**

(87) International publication number:
**WO 2008/036789 (27.03.2008 Gazette 2008/13)**

(54) **VARIABLE STIFFNESS SPOKE FOR A NON-PNEUMATIC ASSEMBLY**

**SPEICHER VON VARIABLER FESTIGKEIT FÜR EINE NICHTPNEUMATISCHE BAUGRUPPE**

**RAYON À RIGIDITÉ VARIABLE POUR ENSEMBLE NON PNEUMATIQUE**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.09.2006 US 846071 P**

(43) Date of publication of application:
**10.06.2009 Bulletin 2009/24**

(73) Proprietors:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventor: **CRON, Steven, M.**
**Simpsonville, SC 29681 (US)**

(74) Representative: **Neugebauer, Jürgen et al**
**Casalonga & Partners**
**Bayerstrasse 71-73**
**80335 München (DE)**

(56) References cited:
EP-A- 1 378 377   DE-U1- 20 000 034
GB-A- 978 913   GB-A- 2 285 777
US-A- 4 917 162   US-A1- 2004 159 385
US-B1- 6 286 572

## EP 2 066 502 B1

## Description

### BACKGROUND

Non-pneumatic deformable structures for use in the support of loads under rolling conditions, such as to support loads for automotive vehicles have been described, for example in United States Patent No. 7,201,194, which is commonly owned by the assignee of the current invention. The structurally supported, non-pneumatic tire disclosed therein includes a reinforced annular band that supports the load and a plurality of web spokes that transmit in tension the load forces between the annular band and a wheel or hub. The tire supports its load solely through the structural properties and, contrary to the mechanism in pneumatic tires, without support from internal air pressure.

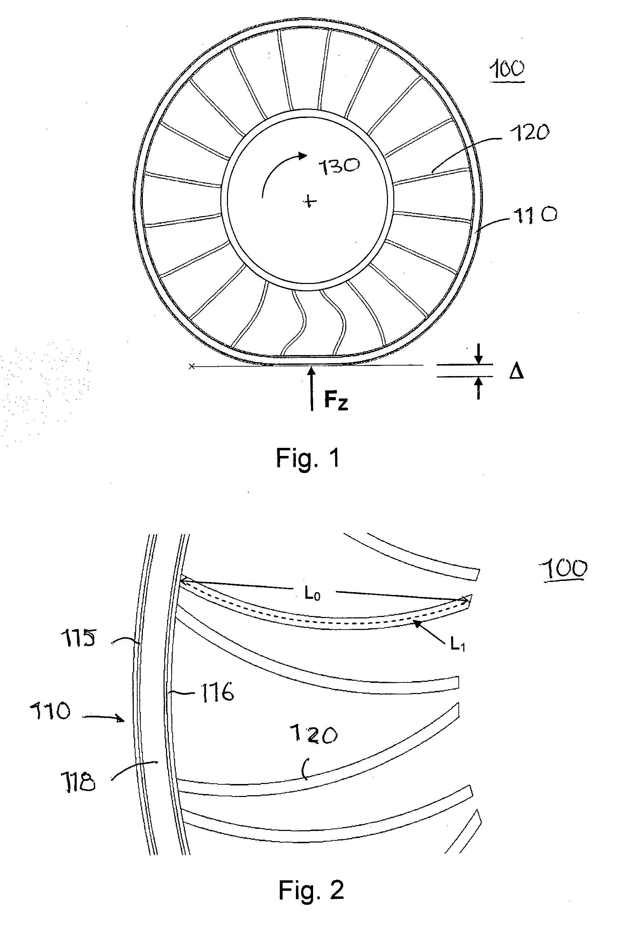

In the exemplary structure shown in Fig. 1 herein, the spokes are shown as radially-oriented elements, which then extend more or less transversely across the width of the non-pneumatic deformable structure. The structure acts as a "top loading" structure meaning that the vertical load applied from the ground against a fixed hub is resisted by tensile forces in the spokes that are generally outside of the region where the band is in contact with the load surface. The spokes in the latter region carry little or no load, as illustrated in Fig. 1, where these spokes have undergone a buckling deformation.

A design characteristic of the non-pneumatic deformable structure is its vertical stiffness. In the current context, vertical stiffness is the increment of vertical force generated for each increment of vertical deflection or displacement upward of the ground with the hub held fixed. Depending on the end-use load carrying application, it may be desirable to have a structure that has a higher initial vertical stiffness. An example of this situation would be an application where there is a high static load, such as a piece of heavy construction equipment. In this instance, the high stiffness limits the static vertical deflection. On the other hand, other applications may benefit from a low initial stiffness. An example of such a use is a hand truck where the device needs to roll easily over obstacles when lightly loaded. One method to control the vertical stiffness of the non-pneumatic deformable structure is to adjust the mechanical properties and dimensions of the outer band. However, this also affects the average contact pressure between the outer band and the loading surface, which is an important overall design criterion for a specific application.

From GB 978 913A there is already known a non-pneumatic deformable structure comprising an outer annular band with a predetermined stiffness, a set of spoke elements with an outer end and an inner end, wherein said outer end is connected to the outer band, said spoke element extends inward and said inner end is connected to an inner hub, wherein the hub is configured to attach the structure to a vehicle axle or other apparatus capable of rotation about an axis; wherein each of said spoke elements has a curvilinear length greater than the length of a straight line segment extending from a point of connection of said outer end of said spoke element with the outer annular band to a point of connection of said inner end of said spoke element to the inner hub, wherein said outer end of said spoke element is tangent to said straight line segment and said inner end of said spoke element is tangent to said straight line segment. However, GB 978 913A is mute with regard to a manufacturing method for a such a non-pneumatic deformable structure and it is in particular mute with regard to varying a spoke excess length, which is defined by the difference in the curvilinear length of a spoke element and the length of said straight line segment, to obtain a predetermined level of the initial vertical load versus deflection stiffness of said deformable structure.

DE200 00 34 U1 dislcoses a resilient wheel, for roll goods and sports equipment, such askateboards or lane roller skates, comprising a hub and a rim, which are connected by at least one resilient spoke, characterized in that the spoke between at least two rigid sections has at least one elastic hinge point having a rotation axis parallel to the wheel axis.

EP-A 1 378 377 relates to a lightweight wheel constructed of titanium or a composite material such as carbon fibre reinforced nylon material wherein the wheel has a central hub and a circular rim which are interconnected by spring elements such as may be formed by a looped spring band having a number of radial loops extending between the hub and rim and wherein a tire strip may be mounted around an outer circumferential face of the rim.

GB-A-2 285 777 discloses a wheel which has the ability to isolate the hub from shocks transmitted by the rim by means of flexible spokes thus eliminating the need for a conventional suspension system as fitted between rigid wheels and vehicle bodies.

US-B1-6 286 572 relates to a shock-absorbing safety wheel which includes a rim, a hub at the center of the rim and connected by a plurality of spring plates and radial support, and a solid tire slidably mounted on the outer periphery of the rim and secured by a pair of rim shields. It is characterized in that the spring plates provide shock-absorbing function to the wheel and the tire is made of solid rubber which will not become flat, which eliminates the need to carry a spare wheel.

### SUMMARY OF THE INVENTION

The invention described herein provides a method for manufacturing a non-pneumatic deformable structure according to claim 1. The dependent claims relate to advantageous embodiments.

2

The features, aspects, and advantages of the invention will become better understood with reference to the following description and the appended claims. The accompanying drawings, which are incorporated in and constitute a part of this specification, illustrate embodiments of the invention and, together with the description, serve to explain the principles of the invention.

DESCRIPTION OF THE FIGURES

Fig. 1 is a transverse section or side view of a non-pneumatic deformable structure 100 illustrating the action of the spoke elements under and upward deflection from an applied vertical force.

Fig. 2 is a detail view of a non-pneumatic deformable structure 100 illustrating the excess length of a spoke element.

Fig. 3a is a graphic showing the vertical load (daN) as a function of the imposed vertical displacement (in mm) for the exemplary spoke elements having three levels of excess length.

Fig. 3b is a graphic showing the vertical stiffness (daN/mm) as a function of the imposed vertical displacement (mm) for the exemplary spoke elements having three levels of excess length.

Fig. 4a is schematic view of a non-pneumatic deformable structure 100, when loaded by an upward deflection.

Fig. 4b is detail view corresponding to the rectangular outline of Fig. 4a, illustrating the stress concentration.

Fig. 5 is a transverse section or side view of a portion non-pneumatic deformable structure 200 illustrating the application of recurved spoke elements.

Fig. 6a is schematic view of a non-pneumatic deformable structure 200, when loaded by an upward deflection.

Fig. 6b is detail view corresponding to the rectangle outline of Fig. 6a, illustrating the reduced stress concentration.

Fig. 7 is a geometric definition of a recurved spoke element showing two concave segments and a convex segment.

Fig. 8 is a graphic showing the vertical load (daN) as a function of the imposed vertical displacement (mm) comparing a non-pneumatic deformable structure 100 to the non-pneumatic deformable structure 200 having recurved spoke elements, and including a reference having zero excess length.

DETAILED DESCRIPTION

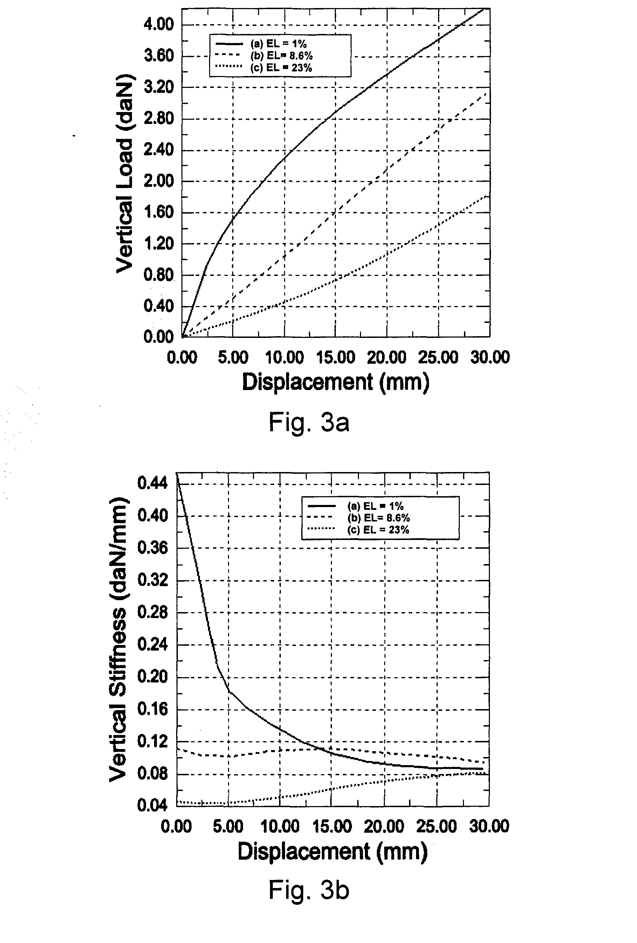

Figure 1 is an example of a non-pneumatic deformable structure 100. The structure comprises an outer band 110 having a predetermined stiffness. A set of spoke-like elements 120 connect the band 110 to a hub 130. The hub 130 may then be attached to a vehicle axle or other apparatus capable of rotation about an axis. The stiffness of the band may be obtained through various types of reinforcements in single or multiple layers. United States Patents No. 7,013,939 and 6,769,465 provide examples of suitable band constructions and design information to obtain a desired load carrying capability. Figure 1 illustrates the application of a vertical load $F_z$ to the non-pneumatic structure 100 under conditions where the hub 130 is held vertically immovable. The portion of the outer band 110 in contact with the ground undergoes an upward vertical displacement A. Figure 3a is a graphical representation of the force $F_z$ (in daN) versus vertical displacement delta for three levels of excess length EL (described below). Figure 3b is a graphical representation of the vertical stiffness (in daN/mm) versus vertical displacement $\Delta$. Vertical stiffness is the slope of the force versus displacement curve for a given displacement.

A method proposed for controlling the vertical stiffness of a non-pneumatic deformable structure is to vary the spoke excess length EL is defined as follows and is illustrated in Fig. 2,

$$Excess\ Length = \left[\left(L_1\middle/L_0\right) - 1\right] * 100\%$$

i. where $L_0$ and $L_1$ are defined below and illustrated in Fig. 2,

ii. $L_0$, is the distance between the spoke ends.

iii. $L_1$, is the curvilinear spoke length.

An analysis was performed on three different non-pneumatic deformable structures with equal design specifications for materials and reinforcements in all respects except for spoke excess length EL. For the analysis, the spoke elements 120 are oriented such that their end attachment points fall on radial lines whereas the spoke elements 120 shown in Fig. 2 are oriented such that their end attachment points fall on lines that are at some angle relative to the radial direction. Either configuration is allowed by the above definition for spoke excess length EL.

A finite element simulation model using commercially available software was developed to evaluate the effect of varying spoke excess length EL on the vertical stiffness of the non-pneumatic deformable structure 100. The model is a two-dimensional simulation, which would correspond to a non-pneumatic deformable structure 100 having a uniform behavior throughout its transverse width. The two-dimensional simulation is a good approximation to the behavior of an actual three-dimensional non-pneumatic deformable structure 100. An example of the three-dimensional structure is shown in United States Patent No. 7,013,939. The output of the model is the vertical force per unit width of the non-pneumatic deformable structure 100.

For this model, a non-pneumatic deformable structure 100 comprises an annular outer band 110 having an outside diameter of 300 mm, connected by the spoke elements 120 to a hub 130 having a diameter of 150 mm. The band 110 is approximately 9 mm thick and further comprises two concentric reinforcing coils 115 and 116, respectively, embedded in the band 110 and spaced apart radially by 7 mm. Each coil 115 or 116 comprises a circumferentially oriented winding of 4x0.26 mm steel cables as used for tire belt material and having a lateral spacing of 1.8 mm between cables in the coil. The effective circumferential tensile stiffness of the coils is converted to stiffness per unit width, or effectively a tensile modulus, for use in the finite element model. The spacing of the cables in the coils also permits the flow of material during molding of the non-pneumatic deformable structure. This configuration creates an annular intermediate layer 118 between the two coils having a thickness of about 7 mm. The non-pneumatic structure 100 has twenty spoke elements 120 that are 2.5 mm thick in the view shown in Fig. 2. The outer diameter of the hub is 150 mm. The non-pneumatic deformable structure 100 is molded as a unit from polyurethane supplied by Chemtura under the designation B836 VIBRATHANE.

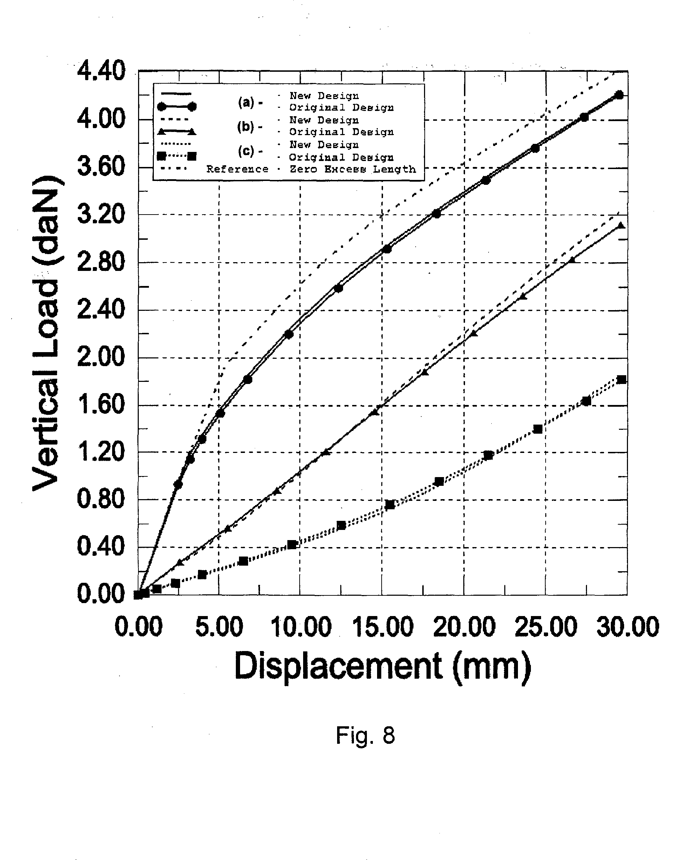

Three non-pneumatic deformable structures 100 with single curvature spoke elements having excess spoke length EL of (a) 0.98%, (b) 8.59%, and (c) 22.9%, respectively were modeled. The predicted vertical force (per unit structure width) versus deflection for these three structures is shown in Fig. 3a. The predicted vertical stiffness (per unit structure width) versus deflection curves for these three structures are shown in Fig. 3b. For reference, a non-pneumatic deformable structure with zero excess length is shown as "reference" in Fig. 8. The vertical force versus deflection has been significantly modified by changing the spoke excess length. When the design having an excess spoke length of 0.98% is compared to the reference structure, it can be seen that vertical load is reduced by about 10% at displacements over 15 mm. However, the vertical stiffness for deflections over 15 mm remains comparable for the two designs.

An unexpected result is found when the variation of vertical stiffness is compared for the three levels of excess spoke length. Fig. 3b provides the comparison of vertical stiffness for the three single curvature designs. Design (a) has a high initial stiffness for deflections less than about 5 mm, and thereafter approaches a relatively constant value, on the order of 0.08 daN/mm at deflections beyond 15 mm. Design (b) has a relatively constant stiffness throughout the range of deflection, and Design (c) has a low initial stiffness that gradually approaches the same value of stiffness as Design (a). This result is advantageous depending on the type of use. For a heavy equipment application having a high static load, the high initial stiffness is desirable to limit the static deflection of the non-pneumatic deformable structure while maintaining a less stiff response during operation of the equipment. On the other hand, for other applications a low initial stiffness is desirable when the device is carrying a small load. In this case, the low stiffness facilitates rolling over obstacles, but a higher stiffness results when a higher load is applied to limit overall deflection of the non-pneumatic deformable structure.

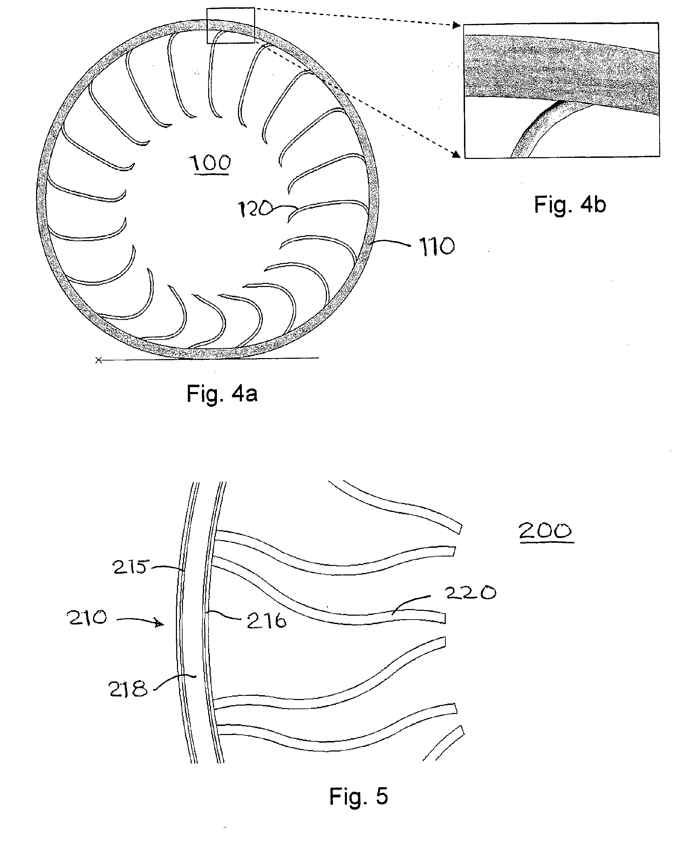

Managing Stress Distribution with Increasing Spoke Excess Length: The deformed shape of the single curvature spoke element of Design (c) having 22.9% excess spoke length EL is shown in Fig. 4a. Figure 4b provides a detail of the area inside the highlight rectangle showing the intersection between the spoke end and the outer band 110. For a radial spoke element with zero excess length, the intersection is perpendicular. As the spoke excess length EL increases the intersection angle between the spoke and the outer band decreases. The same effect occurs at the intersection of the spoke element 120 and the hub 130. This leads to a stress concentration in the region where the spokes connect to the band 110 and to the hub 130.

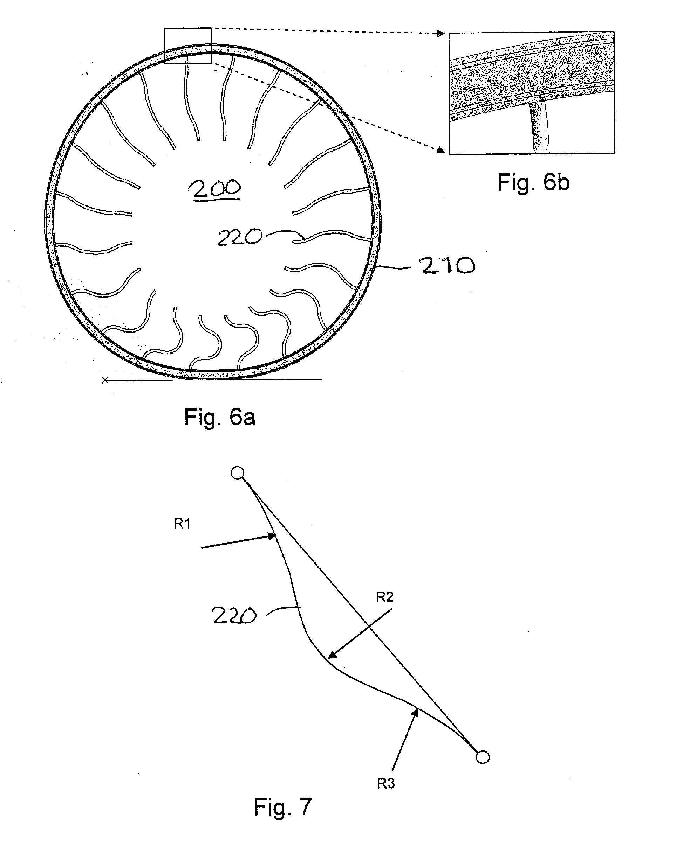

An alternative, improved design was developed to reduce the stress concentration. The improved design for a deformable non-pneumatic structure 200 has a spoke profile where the attachment angle between the spoke element 220 and the band 210 (or hub 230, not shown but equivalent to hub 130 of Fig. 1) is brought closer in alignment with the overall tensile stress resultant in the spoke itself. This is accomplished by employing a recurved profile for spoke element 220 having three primary curvatures, two convex and one concave, whose design shown in Fig. 5 and in detail in Fig. 7. The terms "concave" and "convex" are used for convenience to indicate the sense, positive or negative, of the curvature of the spoke element 220. Geometrically, the recurved spoke element 220, as shown in Fig. 7, is made up of three arcs of essentially equal radius of curvature, R1, R2 and R3 that are mutually tangent and also tangent to a line connecting the desired spoke element end attachment points to the band 210 and to the hub 230. It is not necessary for the three radii of curvature R1, R2 and R3 to be equal. The line connecting the end attachment points (shown by the small circles in Fig. 7) may follow a radial direction or have an angle relative to the radial direction.

Three non-pneumatic deformable structures 200 as depicted in Fig. 6a with the recurved spoke elements 220 were simulated with the model. To better illustrate the advantages of the recurved design, the amount of excess length EL for each of the three designs was adjusted in the model to yield the same vertical stiffness as for the single curvature structures 100 previously shown in Fig. 3a and Fig 3b. For example, the recurved spoke element 220 required only 14% excess spoke length as compared to 22.9% excess spoke length for the single curvature design to obtain approximately the same vertical stiffness. The vertical load versus deflection for the six designs (three single curvature structures 100 and three recurved structures 200) is shown in Fig. 8, where the legend "Original design" corresponds to the structures 100 and the legend "New design" corresponds to the structures 200 having recurved spoke elements 220, and the legend "Reference" corresponds to a spoke element having zero excess length EL. Figure 6b shows the detail of the stress concentration area at the intersection of the spoke element 220 with the band 210 for the recurved spoke design. In the single curvature spoke element 120 (see Fig. 2), the peak stress was 0.733 daN/mm$^2$ whereas the recurved spoke element 220 has a peak stress at the same location of 0.472 daN/mm$^2$, a reduction of 36%. Table 1 below shows a comparison of the single curvature and recurved spoke designs. In each case, the recurved spoke element 220 (within a row in the table) shows a lower principal stress than the single curvature spoke element 120.

Table 1: Spoke Element Excess Length and Maximum Principal Stress

| | **Single Curvature Spoke Elements** | | **Recurved Spoke Elements** | |
|---|---|---|---|---|
| Design | Excess Length (EL) | Principal Stress (daN/mm$^2$) | Excess Length (EL) | Principal Stress (daN/mm$^2$) |
| (a) | 0.98 % | 0.832 | 0.55 % | 0.542 |
| (b) | 8.59 % | 1.019 | 6.01 % | 0.537 |
| (c) | 22.9 % | 0.733 | 14.11 % | 0.472 |

The recurved design can be said to be a more efficient design as it obtains the same adjustment to initial and final vertical stiffness with a reduced amount of excess spoke length and a reduced principal stress at the spoke attachment points. The design principles disclosed have been reduced to practice for non-pneumatic deformable structure 200 for a skid-steer application corresponding to a 12R16.5 pneumatic tire and wheel and for a hand truck application corresponding to a 10x3 pneumatic tire and wheel.

Applicants understand that many other variations are apparent to one of ordinary skill in the art from a reading of the above specification. These variations and other variations are within the spirit and scope of the instant invention as defined by the following appended claims

**Claims**

1. A method for manufacturing a non-pneumatic deformable structure (100, 200) comprising an outer annular band (110,210) having a predetermined stiffness, a set of spoke elements (120, 220) having an outer end and an inner end, said outer end being connected to the outer band (110, 210), said spoke element (120, 220) extending inward and said inner end being connected to an inner hub (130, 230), the hub (130, 230) being configured to attach the structure to a vehicle axle or other apparatus capable of rotation about an axis; each of said spoke elements (120, 220) having a curvilinear length greater than the length of a straight line segment extending from a point of connection of said outer end of said spoke element (120, 220) with the outer annular band (110, 210) to a point of connection of said inner end of said spoke element (120,220) to the inner hub (130, 230), with said outer end of said spoke element (120, 220) being tangent to said straight line segment and said inner end of said spoke element (120,220) being tangent to said straight line segment, **characterized in that** a difference in the curvilinear length of said spoke element (120, 220) and the length of said straight line segment defines a spoke excess length, and wherein said excess length is varied to obtain a predetermined level of the vertical load versus deflection stiffness of said deformable structure (100, 200).

**2.** The method for manufacturing a deformable structure (100, 200) according to claim 1, wherein a transverse section of said spoke element (120, 220) comprises at least two concave segments and at least one convex segment.

**3.** The method for manufacturing a deformable structure (100, 200) according to claim 2, wherein said concave segments and said convex segment are mutually tangent at their points of intersection.

**4.** The method for manufacturing a deformable structure (100, 200) according to claim 3, wherein said concave segments and said convex segment are each formed of a circular arc segment having a radius of curvature.

**5.** The method for manufacturing a deformable structure (100, 200) according to claim 4, wherein said radius of curvature of each of said convex and concave segments are equal to each other.

**6.** The method for manufacturing a deformable structure (100, 200) according to claim 1, wherein said excess length is greater or equal to than about 0.5% and less than or equal to about 15%.

**7.** The method for manufacturing a deformable structure according to claim 1, wherein said vertical load versus deflection stiffness is determined in a range of vertical deflection less than about 5 mm.

**Patentansprüche**

**1.** Verfahren zur Herstellung einer nichtpneumatischen verformbaren Struktur (100, 200), die ein äußeres ringförmiges Band (110, 210) mit einer vorbestimmten Steifigkeit und einen Satz von Speichenelementen (120, 220) mit einem äußeren Ende und einem inneren Ende umfasst, wobei das äußere Ende mit dem äußeren Band (110, 210) verbunden ist, wobei sich das Speichenelement (120, 220) nach innen erstreckt und das innere Ende mit einer inneren Nabe (130, 230) verbunden ist, wobei die Nabe (130, 230) dafür ausgebildet ist, die Struktur an einer Fahrzeugachse oder anderen Vorrichtung, die in der Lage ist, um eine Achse zu rotieren, zu befestigen; wobei jedes der Speichenelemente (120, 220) eine krummlinige Länge aufweist, die größer als die Länge eines Geradenabschnitts ist, der sich von einem Verbindungspunkt des äußeren Endes des Speichenelements (120, 220) mit dem äußeren ringförmigen Band (110, 210) zu einem Verbindungspunkt des inneren Endes des Speichenelements (120, 220) mit der inneren Nabe (130, 230) erstreckt, wobei das äußere Ende des Speichenelements (120, 220) tangential zu dem Geradenabschnitt ist und das innere Ende des Speichenelements (120, 220) tangential zu dem Geradenabschnitt ist, **dadurch gekennzeichnet, dass** eine Differenz zwischen der krummlinigen Länge des Speichenelements (120, 220) und der Länge des Geradenabschnitts einen Speichen-Längenüberschuss definiert, und wobei dieser Längenüberschuss variiert wird, um ein vorbestimmtes Niveau der durch die Abhängigkeit zwischen Vertikallast und Durchbiegung ausgedrückten Steifigkeit der verformbaren Struktur (100, 200) zu erzielen.

**2.** Verfahren zur Herstellung einer verformbaren Struktur (100, 200) nach Anspruch 1, wobei ein Querschnitt des Speichenelements (120, 220) mindestens zwei konkave Abschnitte und mindestens einen konvexen Abschnitt umfasst.

**3.** Verfahren zur Herstellung einer verformbaren Struktur (100, 200) nach Anspruch 2, wobei die konkaven Abschnitte und der konvexe Abschnitt an ihren Schnittpunkten tangential zueinander sind.

**4.** Verfahren zur Herstellung einer verformbaren Struktur (100, 200) nach Anspruch 3, wobei die konkaven Abschnitte und der konvexe Abschnitt jeweils von einem Kreisbogensegment gebildet werden, das einen Krümmungsradius aufweist.

**5.** Verfahren zur Herstellung einer verformbaren Struktur (100, 200) nach Anspruch 4, wobei die Krümmungsradien aller konvexen und konkaven Abschnitte gleich sind.

**6.** Verfahren zur Herstellung einer verformbaren Struktur (100, 200) nach Anspruch 1, wobei der Längenüberschuss größer als oder gleich etwa 0,5 % und kleiner als oder gleich etwa 15 % ist.

**7.** Verfahren zur Herstellung einer verformbaren Struktur nach Anspruch 1, wobei die durch die Abhängigkeit zwischen Vertikallast und Durchbiegung ausgedrückte Steifigkeit in einem Bereich der vertikalen Durchbiegung von weniger als etwa 5 mm bestimmt wird.

**Revendications**

1. Procédé de fabrication d'une structure déformable non pneumatique (100, 200) comprenant une bande annulaire extérieure (110, 210) ayant une rigidité pré-déterminée, un ensemble d'éléments formant rayons (120, 220) ayant une extrémité extérieure et une extrémité intérieure, ladite extrémité extérieure étant reliée à la bande extérieure (110, 210), ledit élément formant rayon (120, 220) s'étendant vers l'intérieur et ladite extrémité intérieure étant reliée à un moyeu intérieur (130, 230), le moyeu (130, 230) étant configuré pour fixer la structure à un essieu de véhicule ou un autre dispositif capable d'une rotation autour d'un axe; chacun desdits éléments formants rayons (120, 220) ayant une longueur curviligne supérieure à la longueur d'un segment de ligne droite s'étendant d'un point de raccordement de ladite extrémité extérieure dudit élément formant rayon (120, 220) à la bande annulaire extérieure (110, 210) jusqu'à un point de raccordement de ladite extrémité intérieure dudit élément formant rayon (120, 220) au moyeu intérieur (130, 230), ladite extrémité extérieure dudit élément formant rayon (120, 220) étant tangente audit segment de ligne droite et ladite extrémité intérieure dudit élément formant rayon (120, 220) étant tangente audit segment de ligne droite, **caractérisé en ce que** une différence entre la longueur curviligne dudit élément formant rayon (120, 220) et la longueur dudit segment de ligne droite définit une longueur excédentaire du rayon, et ladite longueur excédentaire est modifiée pour obtenir un niveau prédéterminé de la charge verticale par rapport à la rigidité en flexion de ladite structure déformable (100, 200).

2. Procédé de fabrication d'une structure déformable (100, 200) selon la revendication 1, selon lequel une section transversale dudit élément formant rayon (120, 220) comprend au moins deux segments concaves et au moins un segment convexe.

3. Procédé de fabrication d'une structure déformable (100, 200) selon la revendication 2, selon lequel lesdits segments concaves et ledit segment convexe sont mutuellement tangents à leurs points d'intersection.

4. Procédé de fabrication d'une structure déformable (100, 200) selon la revendication 3, selon lequel lesdits segments concaves et ledit segment convexe sont chacun formés d'un segment d'arc circulaire ayant un rayon de courbure.

5. Procédé de fabrication d'une structure déformable (100, 200) selon la revendication 4, selon lequel lesdits rayons de courbure de chacun desdits segments convexe et concaves sont égaux les uns aux autres.

6. Procédé de fabrication d'une structure déformable (100, 200) selon la revendication 1, selon lequel ladite longueur excédentaire est supérieure ou égale à environ 0,5 % et inférieure ou égale à environ 15 %.

7. Procédé de fabrication d'une structure déformable selon la revendication 1, selon lequel ladite charge verticale par rapport à la rigidité en flexion est déterminée dans une plage de flexion verticale inférieure à environ 5 mm.

Fig. 1

Fig. 2

Fig. 3a

Fig. 3b

Fig. 4b

Fig. 4a

Fig. 5

Fig. 6b

Fig. 6a

Fig. 7

Fig. 8

**EP 2 066 502 B1**

## REFERENCES CITED IN THE DESCRIPTION

**Patent documents cited in the description**

- US 7201194 B
- GB 978913 A
- DE 2000034 U1
- EP 1378377 A
- GB 2285777 A
- US 6286572 B1
- US 7013939 B
- US 6769465 B